(19) Europäisches Patentamt
European Patent Office
Office européen des brevets

(11) **EP 1 110 185 B1**

(12) **EUROPÄISCHE PATENTSCHRIFT**

(45) Veröffentlichungstag und Bekanntmachung des Hinweises auf die Patenterteilung:
**18.05.2011 Patentblatt 2011/20**

(21) Anmeldenummer: **99969168.6**

(22) Anmeldetag: **07.09.1999**

(51) Int Cl.:
**G07F 7/10** (2006.01)

(86) Internationale Anmeldenummer:
**PCT/EP1999/006580**

(87) Internationale Veröffentlichungsnummer:
**WO 2000/016272 (23.03.2000 Gazette 2000/12)**

(54) **ZUGRIFFSGESCHÜTZTER DATENTRÄGER**

ACCESS-PROTECTED DATA CARRIER

SUPPORT DE DONNEES D'ACCES PROTEGE

(84) Benannte Vertragsstaaten:
**AT BE CH CY DE DK ES FI FR GB GR IE IT LI LU MC NL PT SE**

(30) Priorität: **11.09.1998 DE 19841676**

(43) Veröffentlichungstag der Anmeldung:
**27.06.2001 Patentblatt 2001/26**

(73) Patentinhaber: **Giesecke & Devrient GmbH**
**81677 München (DE)**

(72) Erfinder:
• **VATER, Harald**
**D-35398 Gießen (DE)**
• **DREXLER, Hermann**
**D-81371 München (DE)**

(56) Entgegenhaltungen:
**EP-A- 0 743 775   US-A- 4 974 193**

**Beschreibung**

Die Erfindung betrifft einen Datenträger, der einen Halbleiterchip aufweist, in dem geheime Daten abgespeichert sind. Insbesondere betrifft die Erfindung eine Chipkarte.

Datenträger die einen Chip enthalten, werden in einer Vielzahl von unterschiedlichen Anwendungen eingesetzt, beispielsweise zum Durchführen von Finanztransaktionen, zum Bezahlen von Waren oder Dienstleistungen, oder als Identifikationsmittel zur Steuerung von Zugangs- oder Zutrittskontrollen. Bei allen diesen Anwendungen werden innerhalb des Chips des Datenträgers in der Regel geheime Daten verarbeitet, die vor dem Zugriff durch unberechtigte Dritte geschützt werden müssen. Dieser Schutz wird unter anderem dadurch gewährleistet, daß die inneren Strukturen des Chips sehr kleine Abmessungen aufweisen und daher ein Zugriff auf diese Strukturen mit dem Ziel, Daten, die in diesen Strukturen verarbeitet werden, auszuspähen, sehr schwierig ist. Um einen Zugriff weiter zu erschweren, kann der Chip in eine sehr fest haftende Masse eingebettet werden, bei deren gewaltsamer Entfernung das Halbleiterplättchen zerstört wird oder zumindest die darin gespeicherten geheimen Daten vernichtet werden. Ebenso ist es auch möglich, das Halbleiterplättchen bereits bei dessen Herstellung mit einer Schutzschicht zu versehen, die nicht ohne Zerstörung des Halbleiterplättchens entfernt werden kann.

Mit einer entsprechenden technischen Ausrüstung, die zwar extrem teuer aber dennoch prinzipiell verfügbar ist, könnte es einem Angreifer möglicherweise gelingen, die innere Struktur des Chips freizulegen und zu untersuchen. Das Freilegen könnte beispielsweise durch spezielle Ätzverfahren oder durch einen geeigneten Abschleifprozeß erfolgen. Die so freigelegten Strukturen des Chips, wie beispielsweise Leiterbahnen, könnten mit Mikrosonden kontaktiert oder mit anderen Verfahren untersucht werden, um die Signalverläufe in diesen Strukturen zu ermitteln. Anschließend könnte versucht werden, aus den detektierten Signalen geheime Daten des Datenträgers, wie z.B. geheime Schlüssel zu ermitteln, um diese für Manipulationszwecke einzusetzen. Ebenso könnte versucht werden, über die Mikrosonden die Signalverläufe in den freigelegten Strukturen gezielt zu beeinflussen.

Der Erfindung liegt die Aufgabe zugrunde, geheime Daten, die in dem Chip eines Datenträgers vorhanden sind, vor unberechtigtem Zugriff zu schützen.

Diese Aufgabe wird durch die Merkmalskombinationen der Ansprüche 1 und 9 gelöst.

Die erfindungsgemäße Lösung zielt im Gegensatz zum Stand der Technik nicht darauf ab, ein Freilegen der internen Strukturen des Chips und ein Anbringen von Mikrosonden zu verhindern. Es werden stattdessen Maßnahmen getroffen, die es einem potientellen Angreifer erschweren, aus den gegebenenfalls abgehörten Signalverläufen Rückschlüsse auf geheime Informationen zu schließen. Diese Maßnahmen bestehen erfindungsgemäß darin, sicherheitsrelevante Operationen so zu manipulieren, daß die bei der Durchführung dieser sicherheitsrelevanten Operationen verwendeten Geheimdaten nicht ohne Hinzunahme weiterer geheimer Informationen ermittelbar sind. Hierzu werden die sicherheitsrelevanten Operationen vor ihrer Ausführung mit Hilfe geeigneter Funktionen verfremdet oder verfälscht. Um insbesondere eine statistische Auswertung bei mehrfacher Ausführung der sicherheitsrelevanten Operationen zu erschweren oder gar unmöglich zu machen, fließt in die Verfremdungsfunktion eine Zufallkomponente ein. Aus der Patentanmeldung GB 2 285 562 A ist ein Verschlüsselungsverfahren bekannt, bei dem mit Hilfe von Permutationen und Substitutionstabellen ein Klartext in einen verschlüsselten Text gewandelt wird. Zur Abwehr von Kryptoanalyseangriffen wird vorgeschlagen, bei der Verschlüsselung in die Berechnungen von einem Pseudozufallszahlengenerator erzeugte Zufallszahlen einfließen zu lassen, um zu verhindern, dass bei einer wiederholten Verschlüsselung von Klartexten, die sich nur geringfügig voneinander unterscheiden auf den Schlüssel rückgeschlossen werden kann.

Dies hat zur Folge, daß ein Angreifer aus gegebenenfalls abgehörten Datenströmen die Geheimdaten nicht ermitteln kann.

Die sicherheitsrelevante Operation wird im folgenden von der Funktion h repräsentiert, die Eingangsdaten x auf Ausgangsdaten y abbildet, d.h. $y = h(x)$. Um ein Ausspähen der geheimen Eingangsdaten x zu verhindern, wird gemäß der Erfindung eine verfremdete Funktion $h_{R1R2}$ ermittelt, so daß gilt

$$y \otimes R_2 = h_{R1R2}(x \otimes R_1).$$

Die sicherheitsrelevante Operation wird nunmehr mittels der verfremdeten Funktion $h_{R1R2}$ durchgeführt, deren Eingangsdaten nicht die echten Geheimdaten x sind, sondern verfremdete Geheimdaten $x \otimes R_1$, die durch Verknüpfen der echten Geheimdaten x mit einer Zufallszahl $R_1$ erzeugt wurden. Ohne Kenntnis der Zufallszahl $R_1$ können die echten Geheimdaten x aus den verfremdeten Geheimdaten $x \otimes R_1$ nicht ermittelt werden. Als Ergebnis der Anwendung der verfremdeten Funktion $h_{R1R2}$ auf die verfremdeten Geheimdaten $x \otimes R_1$ erhält man verfremdete Ausgangsdaten $y \otimes R_2$. Aus den verfremdeten Ausgangsdaten $y \otimes R_2$ lassen sich durch eine geeignete Verknüpfung die Ausgangsdaten y ermitteln. Vor jeder erneuten Durchführung der sicherheitsrelevanten Funktion können neue Zufallszahlen $R_1$ und $R_2$ vorgegeben werden, aus denen jeweils eine neue verfremdete Funktion $h_{R1R2}$ ermittelt wird. Alternativ dazu können mehrere verfremdete Funktionen $h_{R1R2}$ fest abgespeichert sein, von denen vor Durchführung der sicherheitsrelevanten Operation jeweils eine zufällig ausgewählt wird. Dabei ist es besonders vorteilhaft zwei Funktionen $h_{R1R2}$ und $h_{R1'R2'}$ zu verwenden, bei denen die Zufallszahlen $R_1$ und $R'_2$ die bzgl der für die Verfremdung gewählten Verknüpfungsart inversen Werte der Zufallszahlen $R_1$ und $R_2$ sind. In einer weiteren Variante können die Zufallszahlen $R_1$ und $R_2$ auch gleich sein. Insbesondere können die Zufallszahlen $R_1$ und $R_2$ statistisch unabhängig gewählt werden, so daß es keine Korrelation zwischen Ein- und Ausgangsdaten gibt, die für einen Angriff verwendet werden können.

Werden vor oder nach der hier betrachteten sicherheitsrelevanten Operation h noch weitere Operationen abgearbeitet, so können die Zufallszahlen $R_1$ und $R_2$ auch zur Verfremdung der mit den weiteren Operationen bearbeiteten Daten benützt werden.

Besonders vorteilhaft läßt sich die erfindungsgemäße Lösung bei sicherheitsrelevanten Operationen einsetzen, die nichtlineare Funktionen beinhalten. Bei nichtlinearen Funktionen können bereits bekannte Schutzmaßnahmen, die auf einer Verfremdung der Geheimdaten vor der Ausführung der Funktionen basieren, nicht angewendet werden. Die bekannten Schutzmaßnahmen setzten nämlich voraus, daß die Funktionen linear bezüglich der Verfremdungsoperationen sind, damit die Verfremdung nach Ausführung der Funktionen wieder rückgängig gemacht werden kann. Bei der erfindungsgemäßen Lösung werden aber nicht nur die Geheimdaten verfälscht oder verfremdet, sondern auch die sicherheitsrelevanten Operationen, die die Geheimdaten verarbeiten. Die Verfremdung der Geheimdaten und der sicherheitsrelevanten Operationen werden dabei so aufeinander abgestimmt, daß aus den verfremdeten Geheimdaten nach Durchführung der sicherheitsrelevanten Operationen die echten Geheimdaten abgeleitet werden können. Die Abstimmung zwischen der Verfremdung der Geheimdaten und der sicherheitsrelevanten Operationen läßt sich besonders einfach realisieren, wenn die sicherheitsrelevanten Operationen in Form von Tabellen, sogenannten Look-up-tables, realisiert sind. In den genannten Tabellen ist jedem Eingangswert x ein Ausgangswert y zugeordnet. Die Ausführung der durch die Tabellen realisierten Funktionen erfolgt durch Nachschlagen der zu den jeweiligen Eingangswerten x gehörigen Ausgangswerte y.

Die Erfindung wird nachstehend anhand der in den Figuren dargestellten Ausführungsformen erläutert. Es zeigen:

Fig.1                eine Chipkarte in Aufsicht,

Fig. 2             einen stark vergrößerten Ausschnitt des Chips der in Fig.1 dargestell- ten Chipkarte in Aufsicht,

Fig. 3a, 3b, 3c und 3d    Darstellungen von Look-up-tables.

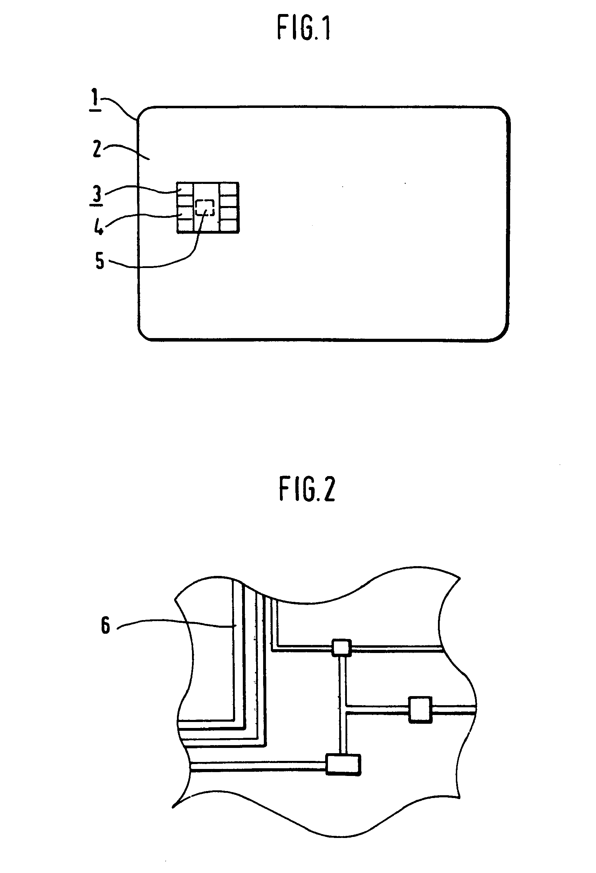

In Fig.1 ist als ein Beispiel für den Datenträger eine Chipkarte 1 dargestellt. Die Chipkarte 1 setzt sich aus einem Kartenkörper 2 und einem Chipmodul 3 zusammen, das in eine dafür vorgesehene Aussparung des Kartenkörpers 2 eingelassen ist. Wesentliche Bestandteile des Chipmoduls 3 sind Kontaktflächen 4, über die eine elektrische Verbindung zu einem externen Gerät hergestellt werden kann und ein Chip 5, der mit den Kontaktflächen 4 elektrisch verbunden ist. Alternativ oder zusätzlich zu den Kontaktflächen 4 kann auch eine in Fig.1 nicht dargestellte Spule oder ein anderes Übertragungmittel zur Herstellung einer Kommunikationsverbindung zwischen dem Chip 5 und einem externen Gerät vorhanden sein.

In Fig. 2 ist ein stark vergrößerter Ausschnitt des Chips 5 aus Fig.1 in Aufsicht dargestellt. Das besondere der Fig. 2 liegt darin, daß die aktive Oberfläche des Chips 5 dargestellt ist, d.h. sämtliche Schichten, die im allgemeinen die aktive. Schicht des Chips 5 schützen, sind in Fig. 2 nicht dargestellt. Um Informationen über die Signalverläufe im Inneren des Chips zu erhalten, können beispielsweise die freigelegten Strukturen 6 mit Mikrosonden kontaktiert werden. Bei den Mikrosonden handelt es sich um sehr dünne Nadeln, die mittels einer Präzisions-Positioniereinrichtung mit den freigelegten Strukturen 6, beispielsweise Leiterbahnen in elektrischen Kontakt gebracht werden. Die mit den Mikrosonden aufgenommenen Signalverläufe werden mit geeigneten Meß- und Auswerteeinrichtungen weiterverarbeitet mit dem Ziel, Rückschlüsse auf geheime Daten des Chips schließen zu können.

Mit der Erfindung wird erreicht, daß ein Angreifer auch dann, wenn es ihm gelungen sein sollte, die Schutzschicht des Chips 5 ohne Zerstörung des Schaltkreises zu entfernen und die freigelegten Strukturen 6 des Chips 5 mit Mikrosonden zu kontaktieren oder auf andere Weise abzuhören nur sehr schwer oder gar nicht Zugang zu insbesondere geheimen Daten des Chips erlangt. Selbstverständlich greift die Erfindung auch dann, wenn ein Angreifer auf andere Art und Weise Zugang zu den Signalverläufen des Chips 5 erlangt.

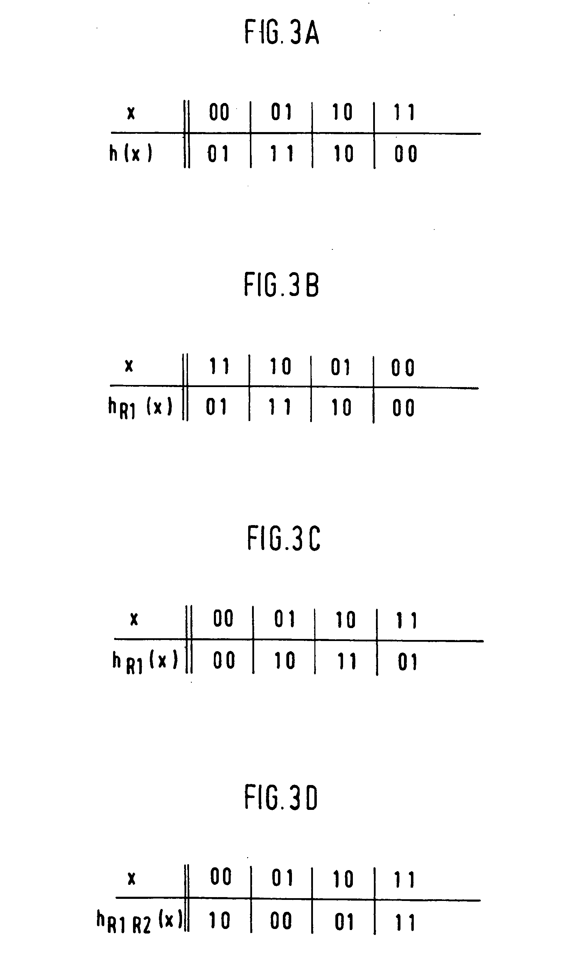

Die Figuren 3a, 3b, 3c und 3d zeigen einfache Beispiele für Look-up-tables, bei denen sowohl die Eingangs- als auch die Ausgangsdaten jeweils eine Länge von 2 bit haben. Alle Tabellenwerte sind als binäre Daten dargestellt. In der ersten Zeile sind jeweils die Eingangsdaten x und in der zweiten Zeile die jeweils spaltenweise zugeordneten Ausgangsdaten y dargestellt.

In Figur 3a ist ein Look-up-table für die nicht verfremdete Funktion h dargestellt. Der Figur 3a ist entnehmbar, daß dem Eingangswert x = 00 der Ausgangswert h (x) = 01 zugeordnet ist, dem Eingangswert 01 der Ausgangswert 11, dem Eingangswert 10 der Ausgangswert 10 und dem Eingangswert 11 der Ausgangswert 00. Die Look-up-table gemäß Figur 3a repräsentiert eine nichtlineare Funktion h, die im Rahmen einer sicherheitsrelevanten Operation ausgeführt werden soll. Im Rahmen der Erfindung wird bei der Durchführung der sicherheitsrelevanten Operation jedoch nicht die in Figur 3a abgebildete Look-up-table selbst verwendet, sondern aus dieser Look-up-table wird gemäß den Figuren 3b, 3c und 3d eine verfremdete Look-up-table abgeleitet.

In Figur 3b ist ein Zwischenschritt der Ermittlung der verfremdeten Look-up-table dargestellt. Die Look-up-table gemäß Figur 3b wurde aus der Look-up-table gemäß Figur 3a erzeugt, indem jeder Wert der ersten Zeile der Tabelle aus Figur 3a mit der Zufallszahl $R_1$ = 11 EXOR verknüpft wurde. So ergib die EXOR-Verknüpfung des Wertes 00 der ersten Zeile und ersten Spalte der Tabelle aus Figur 3a mit der Zahl 11 den Wert 11, der nunmehr das Element der ersten Zeile und ersten Spalte der Tabelle der Figur 3b darstellt. Entsprechend werden die restlichen Werte der ersten Zeile der in Figur 3b dargestellten Tabelle aus den Werten der ersten Zeile der in Figur 3a dargestellten Tabelle und der Zufallszahl $R_1$ = 11 ermittelt. Die in Figur 3b dargestellte Tabelle könnte bereits als verfremdete Look-up-table zur Verarbeitung von ebenfalls mit der Zufallszahl $R_1$ = 11 verfremdeten Geheimdaten eingesetzt werden. Das Ergebnis wäre dann jeweils die in Zeile 2 der Tabelle aus Figur 3b abzulesenden Klartextwerte.

Üblicherweise ordnet man die einzelnen Spalten einer Look-up-table nach aufsteigenden Eingangsdaten x an. Eine durch entsprechende Umsortierung der Tabelle in Figur 3b ermittelte Tabelle ist in Figur 3c dargestellt.

Falls die Tabelle gemäß Figur 3c noch weiter verfremdet werden soll bzw. als Ausgangswerte keine Klartextwerte sondern ebenfalls verfremdete Werte liefern soll, wird eine weitere EXOR-Operation mit einer weiteren Zufallszahl $R_2$ angewendet.

In Figur 3d ist das Ergebnis der Anwendung dieser weiteren EXOR-Operation dargestellt. Bei dieser Operation werden jeweils die Elemente der zweiten Zeile der Tabelle gemäß Figur 3c mit der Zufallszahl $R_2$ = 10 EXOR verknüpft. Das Element in der zweiten Zeile und der ersten Spalte der Tabelle gemäß Figur 3d entsteht also durch EXOR-Verknüpfung des Elements in der zweiten Zeile und ersten Spalte der Tabelle gemäß Figur 3c der Zufallszahl $R_2$ = 10. Entsprechend werden die weiteren Elemente der zweiten Zeile der Tabelle gemäß Figur 3d gebildet. Die erste Zeile der Tabelle gemäß Figur 3d wird von Figur 3c unverändert übernommen.

Mit der in Figur 3d abgebildeten Tabelle können aus verfremdeten Eingangsdaten ebenfalls verfremdete Ausgangsdaten ermittelt werden. Die so ermittelten verfremdeten Ausgangsdaten können weiteren Operationen zugeführt werden, mit denen verfremdete Daten verarbeitet werden sollen oder es können daraus durch EXOR-Verknüpfung mit der Zufallszahl $R_2$ = 10 Klartextdaten ermittelt werden.

Durch Verwendung der in Figur 3d dargestellten Tabelle ist es möglich, auch nichtlineare Operationen mit verfremdeten Geheimdaten durchzuführen und diese Geheimdaten vor unberechtigtem Zugriff zu schützen. Weiterhin werden auch die sicherheitsrelvanten Operationen selbst vor unberechtigtem Zugriff geschützt, da bei jeder Durchführung der Operationen andersartig verfremdete Funktionen eingesetzt werden können und man selbst dann, wenn man die verfremdeten Funktionen ermitteln könnte, nicht auf die sicherheitsrelevanten Operationen selbst schließen kann. Nach Umwandlung in Klartext liefern aber sowohl die ursprünglichen sicherheitsrelevanten Operationen als auch die mit Hilfe von verfremdeten Funktionen durchgeführten Operationen identische Ergebnisse. So ergibt beispielsweise ein Eingangswert 00 gemäß der Tabelle in Figur 3a einen Ausgangswert 01. Um zu überprüfen, ob die in Figur 3d dargestellte verfremdete Tabelle den gleichen Ausgangswert liefert, muß der Eingangswert 00 zunächst mit der Zufallszahl $R_1$ = 11 EXOR verknüpft werden. Als Ergebnis dieser Verknüpfung erhält man den Wert 11. Laut der Tabelle aus Figur 3d ergibt ein Eingangswert 11 einen Ausgangswert von ebenfalls 11. Um aus diesem Ausgangswert den Klartext zu ermitteln, ist der Ausgangswert mit der Zufallszahl $R_2$ =10 EXOR zu verknüpfen. Als Ergebnis dieser Verknüpfung erhält man den Wert 01, der mit dem mit Hilfe der in Figur 3a abgebildeten Tabelle ermittelten Werte exakt übereinstimmt.

Die Verfremdung der sicherheitsrelevanten Operationen bzw. der Eingangswerte kann nicht nur durch EXOR-Verknüpfung erzeugt werden, sondern auch durch andere geeignete Verknüpfungsarten, beispielsweise durch eine modulare Addition. Desweiteren ist die Erfindung nicht auf die Anwendung von nichtlinearen Funktionen begrenzt, die mittels der Look-up-tables repräsentiert werden. Es können vielmehr beliebige nichtlineare und auch lineare Funktionen zum Einsatz kommen, für die eine geeignete verfremdete Funktion ermittelbar ist.

**Patentansprüche**

1.  Datenträger mit einem Halbleiterchip (5) der wenigstens einen Speicher aufweist, in dem ein Betriebsprogramm abgelegt ist, das in der Lage ist, wenigstens eine Operation (h) auszuführen, wobei für die Ausführung der Operation (h) Eingangsdaten (x) benötigt werden und bei der Ausführung der Operation (h) Ausgangsdaten (y) erzeugt werden, **dadurch gekennzeichnet, daß**

    - die Operation (h) vor ihrer Ausführung verfremdet wird,
    - die verfremdete Operation ($h_{R_1}$) mit verfremdeten Eingangsdaten ($x \otimes R_1$) ausgeführt wird und

- die Verfremdung der Operation (h) und der Eingangsdaten (x) so aufeinander abgestimmt werden, daß die Ausführung der verfremdeten Operation ($h_{R1}$) mit verfremdeten Eingangsdaten ($x \otimes R_1$) Ausgangsdaten (y) ergibt, die mit den Ausgangsdaten (y) identisch sind, die bei Ausführung der nicht verfremdeten Operation (h) mit nicht verfremdeten Eingangsdaten (x) ermittelt werden.

2. Datenträger nach Anspruch 1, **dadurch gekennzeichnet, daß** in die Ermittlung der verfremdeten Operation ($h_{R1}$) und der verfremdeten Eingangsdaten ($x \otimes R_1$) wenigstens eine Zufallszahl ($R_1$) eingeht.

3. Datenträger nach einem der vorhergehenden Ansprüche, **dadurch gekennzeichnet, daß** die Ermittlung der verfremdeten Operation ($h_{R1}$) und der verfremdeten Eingangsdaten ($x \otimes R_1$) unter Zuhilfenahme von EXOR-Verknüpfungen verfolgt.

4. Datenträger nach einem der vorhergehenden Ansprüche, **dadurch gekennzeichnet, daß** die verfremdete Operation ($h_{R1}$) vorab im Datenträger fest eingespeichert wird.

5. Datenträger nach Anspruch 4, **dadurch gekennzeichnet, daß** wenigstens zwei verfremdete Operationen ($h_{R1}$, $h_{R1}'$) vorab in Datenträger fest eingespeichert werden und dann, wenn eine verfremdete Operation ausgeführt werden soll, aus den gespeicherten verfremdeten Operationen ($h_{R1}$, $h_{R1}'$) eine zufallsbedingt ausgewählt wird.

6. Datenträger nach einem der Ansprüche 1 bis 3, **dadurch gekennzeichnet, daß** die verfremdete Operation ($h_{R1}$) vor ihrer Ausführung jeweils neu berechnet wird und für diese Berechnung die wenigstens eine Zufallszahl ($R_1$) neu ermittelt wird.

7. Datenträger nach einem der vorhergehenden Ansprüche, **dadurch gekennzeichnet, daß** die Operation (h) durch eine im Datenträger gespeicherte Tabelle realisiert ist, die eine Zuordnung zwischen den Eingangsdaten (x) und den Ausgangsdaten (y) herstellt.

8. Datenträger nach Anspruch 7, **dadurch gekennzeichnet, daß** die Verfremdung der in der Tabelle enthaltenen Eingangsdaten (x) durch Verknüpfung mit der wenigstens einen Zufallszahl (R1) erfolgt.

9. Datenträger mit einem Halbleiterchip (5) der wenigstens einen Speicher aufweist, in dem ein Betriebsprogramm abgelegt ist, das in der Lage ist, wenigstens eine Operation (h) auszuführen, wobei für die Ausführung der Operation (h) Eingangsdaten (x) benötigt werden und bei der Ausführung der Operation (h) Ausgangsdaten (y) erzeugt werden, **dadurch gekennzeichnet, daß**

- die Operation (h) vor ihrer Ausführung verfremdet wird,
- die verfremdete Operation ($h_{R1}$) mit verfremdeten Eingangsdaten ($x \otimes R_1$) ausgeführt wird,
- die Verfremdung der Operation (h) und der Eingangsdaten (x) so aufeinander abgestimmt werden, daß die Ausführung der verfremdeten Operation ($h_{R1R2}$) mit verfremdeten Eingangsdaten ($x \otimes R_1$) Ausgangsdaten ($y \otimes R_2$) ergibt, die gegenüber den Ausgangsdaten (y), die bei Ausführung der nicht verfremdeten Operation (h) mit nicht verfremdeten Eingangsdaten (x) ermittelt werden, verfremdet sind und
- aus den verfremdeten Ausgangsdaten ($y \otimes R_2$) unter Zuhilfenahme vonDaten ($R_2$), die für die Verfremdung der Operation (h) verwendet wurden, die nicht verfremdeten Ausgangsdaten (y) ermittelbar sind.

10. Datenträger nach Anspruch 9, **dadurch gekennzeichnet, daß** in die Ermittlung der verfremdeten Eingangsdaten ($x \otimes R_1$) wenigstens eine Zufallszahl ($R_1$) eingeht und daß in die Ermittlung der verfremdeten Operationen ($h_{R1R2}$) wenigstens zwei Zufallszahlen ($R_1$, $R_2$) eingehen.

11. Datenträger nach einem der Ansprüche 9 oder 10, **dadurch gekennzeichnet, daß** die Ermittlung der verfremdeten Operation ($h_{R1,R2}$) und der verfremdeten Eingangsdaten ($x \otimes R_1$) unter Zuhilfenahme von EXOR-Verknüpfungen erfolgt.

12. Datenträger nach einem der Ansprüche 9 bis 11, **dadurch gekennzeichnet, daß** die verfremdete Operation ($h_{R1R2}$) vorab im Datenträger fest eingespeichert wird.

13. Datenträger nach Anspruch 12, **dadurch gekennzeichnet, daß** wenigstens zwei verfremdete Operationen ($h_{R1R2}$, $h_{R1'R2}'$) vorab in Datenträger fest eingespeichert werden und dann, wenn eine verfremdete Operation ausgeführt werden soll, aus den gespeicherten verfremdeten Operationen ($h_{R1R2}$, $h_{R1'R2}'$) eine zufallsbedingt ausgewählt wird.

**14.** Datenträger nach Anspruch 13, **dadurch gekennzeichnet, daß** die Zufallszahlen ($R_1$, $R_2$) mit denen die erste verfremdete Operation ($h_{R1R2}$) ermittelt wird bezüglich der Verknüpfung, die bei der Ermittlung der verfremdeten Operationen ($h_{R1R2}$, $h_{R1'R2'}$) verwendet wird, invers sind zu den Zufallszahlen ($R_1'$, $R_2'$), mit denen die zweite verfremdeten Operation ($h_{R1'R2'}$) ermittelt wird.

**15.** Datenträger nach einem der Ansprüche 9 bis 11, **dadurch gekennzeichnet, daß** die verfremdete Operation ($h_{R1R2}$) vor ihrer Ausführung jeweils neu berechnet wird und für diese Berechnung die Zufallszahlen ($R_1$, $R_2$) neu ermittelt werden.

**16.** Datenträger nach einem der Ansprüche 9 bis 15, **dadurch gekennzeichnet, daß** die Operation (h) durch eine im Datenträger gespeicherte Tabelle realisiert ist, die eine Zuordnung zwischen den Eingangsdaten (x) und den Ausgangsaten (y) herstellt.

**17.** Datenträger nachAnspruch 16, **dadurch gekennzeichnet, daß** die Verfremdung der in der Tabelle enthaltenen Eingangsdaten (x) durch Verknüpfung mit der wenigstens einen Zufallszahl (R1) erfolgt und die Verfremdung der in der Tabelle enthaltenen Ausgangsdaten (y) durchVerknüpfung mit der wenigstens einen weiteren Zufallszahl (R2) erfolgt.

**18.** Datenträger nach einem der vorhergehenden Ansprüche, **dadurch gekennzeichnet, daß** es sich bei der Operation (h) um eine bezüglich der für die Verfremdung der Operation (h) eingesetzten Verknüpfung nichtlineare Operation handelt.

**Claims**

**1.** A data carrier having a semiconductor chip (5) with at least one memory containing an operating program which is able to execute at least one operation (*h*), the execution of the operation (*h*) requiring input data (*x*) and the execution of the operation (*h*) generating output data (*y*), **characterized in that**

- the operation (*h*) is disguised before its execution,
- the disguised operation ($h_{R1}$) is executed with disguised input data ($x \otimes R_1$), and
- the disguising of the operation (*h*) and the input data (*x*) is coordinated such that the execution of the disguised operation ($h_{R1}$) with disguised input data ($x \otimes R_1$) yields output data (*y*) identical with the output data (*y*) determined upon execution of the undisguised operation (*h*) with undisguised input data (*x*).

**2.** A data carrier according to claim 1, **characterized in that** at least one random number ($R_1$) enters into the determination of the disguised operation ($h_{R1}$) and the disguised input data ($x \otimes R_1$).

**3.** A data carrier according to either of the above claims, **characterized in that** the determination of the disguised operation ($h_{R1}$) and the disguised input data ($x \otimes R_1$) is effected with the aid of EXOR operations.

**4.** A data carrier according to any of the above claims, **characterized in that** the disguised operation ($h_{R1}$) is permanently stored in the data carrier in advance.

**5.** A data carrier according to claim 4, **characterized in that** at least two disguised operations ($h_{R1}$, $h_{R1'}$) are permanently stored in the data carrier in advance and one of the stored disguised operations ($h_{R1}$, $h_{R1'}$) is selected randomly when a disguised operation is to be executed.

**6.** A data carrier according to any of claims 1 to 3, **characterized in that** the disguised operation ($h_{R1}$) is recalculated before its execution and the at least one random number ($R_1$) is redetermined for said calculation.

**7.** A data carrier according to any of the above claims, **characterized in that** the operation (*h*) is realized by a table stored in the data carrier which establishes an association between the input data (*x*) and the output data (*y*).

**8.** A data carrier according to claim 7, **characterized in that** the disguising of the input data (*x*) contained in the table is effected by combination with the at least one random number ($R_1$).

**9.** A data carrier having a semiconductor chip (5) with at least one memory containing an operating program which is able to execute at least one operation ($h$), the execution of the operation ($h$) requiring input data ($x$) and the execution of the operation ($h$) generating output data ($y$), **characterized in that**

- the operation ($h$) is disguised before its execution,
- the disguised operation ($h_{R1}$) is executed with disguised input data ($x \otimes R_1$),
- the disguising of the operation ($h$) and the input data ($x$) is coordinated such that the execution of the disguised operation ($h_{R1R2}$) with disguised input data ($x \otimes R_1$) yields output data ($y \otimes R_2$) which are disguised relative to the output data ($y$) determined upon execution of the undisguised operation ($h$) with undisguised input data ($x$), and
- the undisguised output data ($y$) can be determined from the disguised output data ($y \otimes R_2$) with the aid of data ($R_2$) used for disguising the operation ($h$).

10. A data carrier according to claim 9, **characterized in that** at least one random number ($R_1$) enters into the determination of the disguised input data ($x \otimes R_1$) and at least two random numbers ($R_1$, $R_2$) enter into the determination of the disguised operations ($h_{R1R2}$).

11. A data carrier according to either of claims 9 and 10, **characterized in that** the determination of the disguised operation ($h_{R1R2}$) and the disguised input data ($x \otimes R_1$) is effected with the aid of EXOR operations.

12. A data carrier according to any of claims 9 to 11, **characterized in that** the disguised operation ($h_{R1R2}$) is permanently stored in the data carrier in advance.

13. A data carrier according to claim 12, **characterized in that** at least two disguised operations ($h_{R1R2}$, $h_{R1'R2'}$) are permanently stored in the data carrier in advance and one of the stored disguised operations ($h_{R1R2}$, $h_{R1'R2}$) is selected randomly when a disguised operation is to be executed.

14. A data carrier according to claim 13, **characterized in that** the random numbers ($R_1$, $R_2$) for determining the first disguised operation ($h_{R1R2}$) are inverse to the random numbers ($R_1'$, $R_2'$) for determining the second disguised operation ($h_{R1'R2'}$) with respect to the combination used for determining the disguised operations ($h_{R1R2}$, $h_{R1'R2'}$).

15. A data carrier according to any of claims 9 to 11, **characterized in that** the disguised operation ($h_{R1R2}$) is recalculated before its execution and the random numbers ($R_1$, $R_2$) are redetermined for said calculation.

16. A data carrier according to any of claims 9 to 15, **characterized in that** the operation ($h$) is realized by a table stored in the data carrier which establishes an association between the input data ($x$) and the output data ($y$).

17. A data carrier according to claim 16, **characterized in that** the disguising of the input data ($x$) contained in the table is effected by combination with the at least one random number ($R_1$) and the disguising of the output data ($y$) contained in the table is effected by combination with the at least one further random number ($R_2$).

18. A data carrier according to any of the above claims, **characterized in that** the operation ($h$) is a nonlinear operation with respect to the combination used for disguising the operation ($h$).

**Revendications**

1. Support de données comportant une puce semi-conductrice (5) qui comporte au moins une mémoire dans laquelle est stocké un programme d'exploitation qui est en mesure d'exécuter au moins une opération (h), des données d'entrée (x) étant requises pour l'exécution de l'opération (h) et des données de sortie (y) étant générées lors de l'exécution de l'opération (h), **caractérisé en ce que**

- l'opération (h) est aliénée avant son exécution,
- l'opération aliénée ($h_{R1}$) est exécutée avec des données d'entrée aliénées ($x \otimes R_1$) et
- l'aliénation de l'opération (h) et celle des données d'entrée (x) sont accordées entre elles de telle manière que l'exécution de l'opération aliénée ($h_{R1}$) avec des données d'entrée aliénées ($x \otimes R_1$) produit des données de sortie (y) qui sont identiques avec les données de sortie (y) qui sont déterminées lors de l'exécution de l'opération non aliénée (h) avec des données d'entrée non aliénées (x).

**2.** Support de données selon la revendication 1, **caractérisé en ce qu'**au moins un nombre aléatoire ($R_1$) entre en compte dans la détermination de l'opération aliénée ($h_{R1}$) et des données d'entrée aliénées ($x \otimes R_1$).

**3.** Support de données une des revendications précédentes, **caractérisé en ce que** la détermination de l'opération aliénée ($h_{R1}$) et des données d'entrée aliénées ($x \otimes R_1$) a lieu à l'aide de combinaisons OU-Exclusif.

**4.** Support de données une des revendications précédentes, **caractérisé en ce que** la détermination de l'opération aliénée ($h_{R1}$) est préalablement mémorisée à demeure dans le support de données.

**5.** Support de données selon la revendication 4, **caractérisé en ce qu'**au moins deux opérations aliénées ($h_{R1}$, $h_{R1}'$) sont préalablement mémorisées à demeure dans le support de données et **en ce qu'**ensuite, quand une opération aliénée doit être exécutée, une est choisie aléatoirement parmi les opérations aliénées mémorisées ($h_{R1}$, $h_{R1}'$).

**6.** Support de données selon une des revendications de 1 à 3, **caractérisé en ce que** l'opération aliénée ($h_{R1}$) est respectivement calculée à nouveau avant son exécution et **en ce que** le au moins un nombre aléatoire ($R_1$) est à nouveau déterminé pour ce calcul.

**7.** Support de données une des revendications précédentes, **caractérisé en ce que** l'opération (h) est matérialisée par une table qui est mémorisée dans le support de données et qui établit une allocation entre les données d'entrée (x) et les données de sortie (y).

**8.** Support de données selon la revendication 7, **caractérisé en ce que** l'aliénation des données d'entrée (x) contenues dans la table a lieu par combinaison avec le au moins un nombre aléatoire (R1).

**9.** Support de données comportant une puce semi-conductrice (5) qui comporte au moins une mémoire dans laquelle est stocké un programme d'exploitation qui est en mesure d'exécuter au moins une opération (h), des données d'entrée (x) étant requises pour l'exécution de l'opération (h) et des données de sortie (y) étant générées lors de l'exécution de l'opération (h), **caractérisé en ce que**

- l'opération (h) est aliénée avant son exécution,
- l'opération aliénée ($h_{R1}$) est exécutée avec des données d'entrée aliénées ($x \otimes R_1$),
- l'aliénation de l'opération (h) et celle des données d'entrée (x) sont accordées entre elles de telle manière que l'exécution de l'opération aliénée ($h_{R1R2}$) avec des données d'entrée aliénées ($x \otimes R_1$) produit des données de sortie ($y \otimes R_2$) qui sont aliénées par rapport aux données de sortie (y) qui sont déterminées avec des données d'entrée non aliénées (x) lors de l'exécution de l'opération non aliénée (h) et
- les données de sortie non aliénées (y) sont déterminables à partir des données de sortie aliénées ($y \otimes R_2$) à l'aide de données ($R_2$) qui furent utilisées pour l'aliénation de l'opération (h).

**10.** Support de données selon la revendication 9, **caractérisé en ce qu'**au moins un nombre aléatoire ($R_1$) entre en compte dans la détermination des données d'entrée aliénées ($x \otimes R_1$) et **en ce qu'**au moins deux nombres aléatoires ($R_1$, $R_2$) entrent en compte dans la détermination des opérations aliénées ($h_{R1R2}$).

**11.** Support de données une des revendications 9 ou 10, **caractérisé en ce que** la détermination de l'opération aliénée ($h_{R1}$, $R_2$) et des données d'entrée aliénées ($x \otimes R_1$) a lieu à l'aide de combinaisons OU-Exclusif.

**12.** Support de données une des revendications de 9 à 11, **caractérisé en ce que** l'opération aliénée ($h_{R1R2}$) est préalablement mémorisée à demeure dans le support de données.

**13.** Support de données selon la revendication 12, **caractérisé en ce qu'**au moins deux opérations aliénées ($h_{R1R2}$, $h_{R1'R2'}$) sont préalablement mémorisées à demeure dans le support de données et **en ce qu'**ensuite, quand une opération aliénée doit être exécutée, une est choisie aléatoirement parmi les opérations aliénées mémorisées ($h_{R1R2}$, $h_{R1'R2'}$).

**14.** Support de données selon la revendication 13, **caractérisé en ce que** les nombres aléatoires ($R_1$, $R_2$) avec lesquels la première opération aliénée ($h_{R1R2}$) est déterminée sont, en ce qui concerne la combinaison qui est utilisée lors de la détermination des opérations aliénées ($h_{R1R2}$, $h_{R1'R2'}$), inverses des nombres aléatoires ($R_1'$, $R_2'$) avec lesquels la seconde opération aliénée ($h_{R1'R2'}$) est déterminée.

**15.** Support de données une des revendications de 9 à 11, **caractérisé en ce que** l'opération aliénée ($h_{R_1R_2}$) est respectivement calculée à nouveau avant son exécution et **en ce que** les nombres aléatoires ($R_1$, $R_2$) sont à nouveau déterminés pour ce calcul.

**16.** Support de données une des revendications de 9 à 15, **caractérisé en ce que** l'opération (h) est matérialisée par une table qui est mémorisée dans le support de données et qui établit une allocation entre les données d'entrée (x) et les données de sortie (y).

**17.** Support de données selon la revendication 16, **caractérisé en ce que** l'aliénation des données d'entrée (x) contenues dans la table a lieu par combinaison avec le au moins un nombre aléatoire (R1) et **en ce que** l'aliénation des données de sortie (y) contenues dans la table a lieu par combinaison avec le au moins un nombre supplémentaire aléatoire (R2).

**18.** Support de données une des revendications précédentes, **caractérisé en ce que** l'opération (h) consiste en une opération non linéaire en ce qui concerne la combinaison employée pour l'aliénation de l'opération (h)

# FIG.1

# FIG.2

## FIG. 3A

| x | 00 | 01 | 10 | 11 |
|------|----|----|----|----|
| h(x) | 01 | 11 | 10 | 00 |

## FIG. 3B

| x | 11 | 10 | 01 | 00 |
|-----------|----|----|----|----|
| $h_{R1}(x)$ | 01 | 11 | 10 | 00 |

## FIG. 3C

| x | 00 | 01 | 10 | 11 |
|-----------|----|----|----|----|
| $h_{R1}(x)$ | 00 | 10 | 11 | 01 |

## FIG. 3D

| x | 00 | 01 | 10 | 11 |
|--------------|----|----|----|----|
| $h_{R1\,R2}(x)$ | 10 | 00 | 01 | 11 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2285562 A